# FASCICULE DE BREVET EUROPEEN

(11) **EP 0 414 836 B1**
(45) Date de publication et mention de la délivrance du brevet: **01.09.1993**
(21) Numéro de dépôt: 90901734.5
(22) Date de dépôt: 29.01.1990
(51) Int. Cl.: B62K 21/00, B62K 25/00, B62D 17/00

(54) **VEHICULE AVEC ROUE DIRECTRICE A GEOMETRIE VARIABLE**
FAHRZEUG MIT VERSTELLBARER LENKRADGEOMETRIE
VEHICLE WITH VARIABLE GEOMETRY STEERING WHEEL

(30) Priorité: 30.01.1989 FR 8901324
(43) Date de publication de la demande: 06.03.1991
(73) Titulaire: SBL Société Brevets Licences S.A., CH-1217 MEYRIN/GE (CH)
(72) Inventeur: SBARRO, Franco, CH-1422 Les Tuileries-de-Grandson (CH)
(74) Mandataire: Nithardt, Roland
(86) Numéro de dépôt international: CH9000019
(87) Numéro de publication internationale: WO9008688

(56) Documents cités:
- DE-A- 3 629 881
- FR-A- 2 608 974
- FR-A-00 890 247
- US-A- 4 045 096

## Description

La présente invention concerne un véhicule motrisé ou tracté destiné à se déplacer sur une surface d'appui déterminée, ce véhicule comportant au moins deux roues dont au moins une roue directrice, chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement en forme d'anneau, ce premier roulement comportant au moins un élément annulaire intérieur solidaire de ladite partie centrale de la roue et au moins un élément annulaire périphérique concentrique audit élément annulaire intérieur et solidaire de ladite partie périphérique, cette dernière portant un organe de contact correspondant à la nature de la surface d'appui du véhicule et ladite partie centrale de la roue étant liée à la structure de base du véhicule en au moins une zone d'ancrage décentrée de la roue, dans lequel ladite roue directrice est liée à la structure de base du véhicule par au moins un second roulement disposé dans un plan perpendiculaire au plan dudit premier roulement et comprenant un premier élément intérieur solidaire de l'élément annulaire intérieur dudit premier roulement et un second élément extérieur solidaire de la structure de base du véhicule.

On connait déjà des véhicules de ce type et plus particulièrement des motocyclettes pour lesquelles la présence d'une roue directrice telle que définie ci-dessus apporte des avantages considérables au niveau de la tenue de route, de la stabilité, de la maniabilité, de la sécurité au freinage, de la légèreté, grâce à une conception nouvelle de la structure portante etc.

Les motocyclettes de haute performance, et notamment les motocyclettes de compétition, doivent être en mesure de répondre à des sollicitations extrêmes, sans mettre le pilote dans des situations critiques. Il arrive néanmoins, avec les véhicules connus, que ces limites soient dépassées et entraînent l'accident. Dans ces conditions, le pilote n'a en général aucun moyen d'éviter la chute.

La présente invention se propose de pallier cet inconvénient et a pour objet de permettre au pilote de mettre en oeuvre un moyen supplémentaire nouveau pour sortir d'une situation qui peut être considérée comme irrémédiable lorsqu'il est au guidon d'une motocyclette conventionnelle. Ce moyen est un dispositif de commande du déport de la roue directrice, susceptible d'engendrer un couple de redressement, lorsque la limite critique de l'inclinaison est atteinte, voire dépassée.

Dans ce but, le véhicule selon l'invention est caractérisé en ce que ledit second roulement est monté excentriquement sur un plateau pivotant autour d'un axe perpendiculaire au plan du plateau et parallèle à l'arc du second roulement, et en ce que le véhicule est équipé d'un organe agencé pour faire pivoter ledit plateau autour de son axe.

Selon un mode de réalisation particulièrement avantageux, le plateau est monté dans un guide annulaire solidaire du bras de suspension de la roue directrice de ce véhicule.

Selon ce mode de réalisation préféré, l'organe agencé pour faire pivoter ledit plateau comporte une vis entraînée par un moteur électrique, cette vis étant en prise avec un secteur denté solidaire dudit plateau.

De préférence, ledit second roulement est monté dans un évidement décentré, ménagé dans le plateau et est fixé à ce plateau par l'intermédiaire de son second élément extérieur.

Ce second élément extérieur du second roulement peut être fixé au plateau par une bague de fixation périphérique à l'évidement décentré ménagé dans ce plateau.

Selon une forme de réalisation particulièrement avantageuse l'organe agencé pour faire pivoter ledit plateau comporte au moins une biellette couplée à un vérin.

La présente invention sera mieux comprise en référence à la description d'un exemple de réalisation et du dessin annexé dans lequel :
la fig. 1 représente une vue en élévation d'une motocyclette constituant une forme de réalisation préférée du véhicule selon l'invention, et
la fig. 2 représente une vue schématique, de dessus et partiellement coupée, de la liaison entre le bras de suspension et la roue directrice du véhicule illustré par la fig. 1.

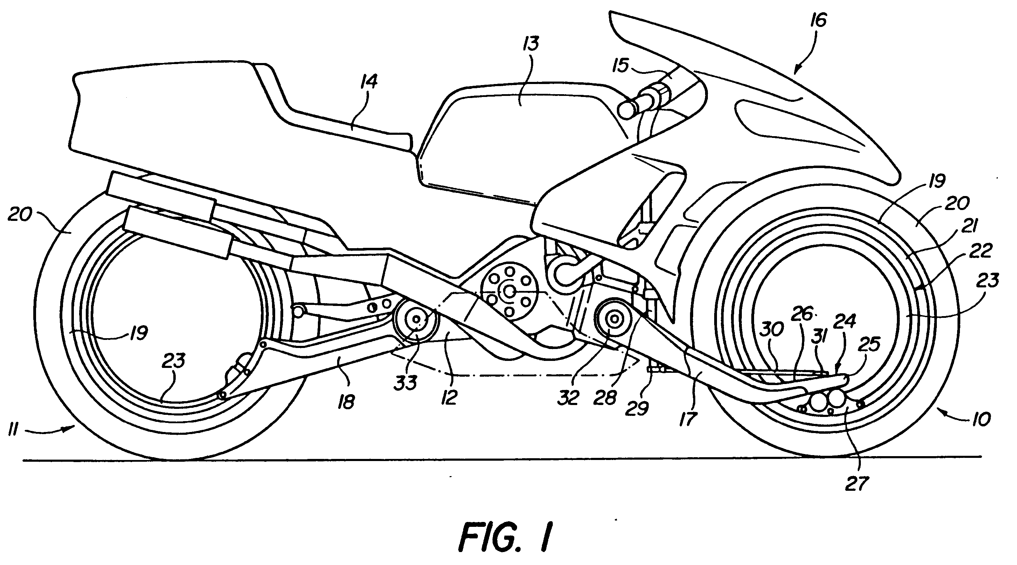

La motocyclette représentée par la fig. 1 comporte de façon connue en soi une roue avant 10, une roue arrière 11, un moteur 12, un réservoir à essence 13 et un siège 14, ces différents éléments étant habillés ou recouverts d'un carénage 16. La roue avant est couplée au moteur par l'intermédiaire d'au moins un bras 17 qui peut également se présenter sous la forme d'une fourche. La roue arrière 11 est de préférence tenue par un bras unique 18 qui pourrait également être remplacé par une fourche. Chacune des roues comporte une jante 19 sur laquelle est monté un pneumatique 20. La jante 19 est fixée à un élément annulaire extérieur 21 d'un roulement à billes 22 ayant la forme d'une couronne. Les bras 17 et 18 sont respectivement fixés à un élément annulaire intérieur 23 des roulements 22 correspondant respectivement aux roues avant 10 et arrière 11.

Le bras 17 porte à son extrémité antérieure un second roulement 24, en forme de couronne, dont l'élément annulaire extérieur 25 est fixé rigidement à cette extrémité du bras 17, ou tenu par les deux branches de la fourche si le bras 17 est remplacé par une fourche, et l'élément annulaire intérieur 26 de ce second roulement 24 est fixé rigidement par l'intermédiaire d'une patte 27 à l'élément annulaire intérieur 23 du premier roulement 22 de la roue avant 10 qui est la roue directrice. Ce second roulement 24 est disposé symétriquement et perpendiculairement par rapport au plan du premier roulement. Son axe passe par le centre théorique de la roue.

On notera que le guidon 15 est relié à l'élément annulaire extérieur 25 du second roulement 24 au moyen d'une tringlerie comportant une tige 28 sensiblement verticale, articulée à son extrémité 29 à une tige sensiblement horizontale 30 qui est reliée audit élément annulaire 25 au moyen d'une rotule 31.

La ligne fictive reliant le point d'articulation du guidon 15 et le point de pivotement de la roue, qui correspond en fait au centre du second roulement, passe également par le centre théorique de la roue.

Dans cette forme de réalisation, les deux bras 17 et 18 sont directement articulés respectivement en 32 et 33 sur le bloc moteur lui-même ou sur un support de ce bloc. La suspension peut être réalisée selon différents principes connus, notamment au moyen d'une lame de ressort réalisée avec de la fibre de carbone et des amortisseurs traditionnels fixés aux bras 17 et 18.

Grâce à cette construction, et notamment grâce à la conception particulière des roues, les moyeux traditionnels lourds et encombrants ont totalement disparu et toutes les forces sont directement transmises aux roues en des points qui se situent le plus près possible de la zone de contact entre les pneumatiques et le revêtement routier.

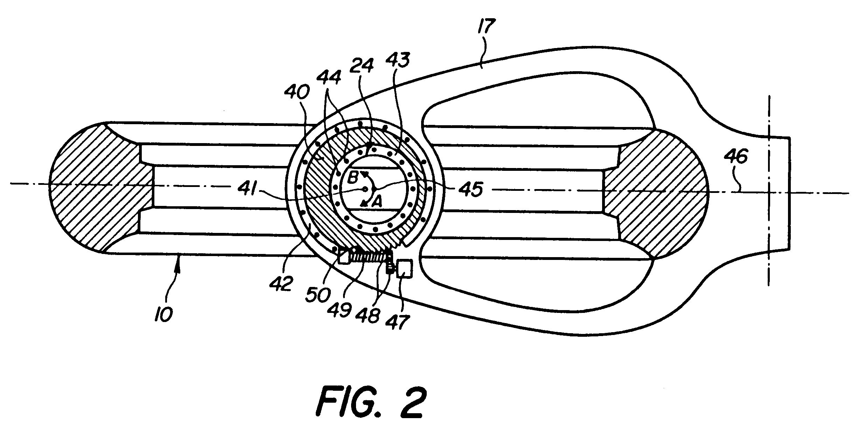

En référence à la fig. 2, la roue directrice 10 est articulée au moyen du second roulement 24 qui est monté dans un évidement circulaire approprié ménagé dans un plateau 40 agencé pour pivoter autour d'un axe 41 et tenu par un guide annulaire 42 solidaire du bras de suspension 17 du véhicule. Dans l'exemple représenté, l'élément extérieur du roulement 24 est rendu solidaire du plateau 40 au moyen d'une bague de fixation 43 et d'un ensemble de boulons 44, et l'élément intérieur du roulement 24 est couplé à l'élément intérieur 19 (non représenté sur cette vue) du premier roulement 22 de la roue 10. Le guide annulaire 42 est conçu de telle manière que le plateau 40 puisse tourner autour de son axe de pivotement 41. Comme le second roulement 24 est monté excentriquement dans le plateau 40, un pivotement du plateau autour de son axe 41 a pour effet de déplacer l'axe 45 du second roulement sur un arc de cercle centré sur l'axe 41 et schématiquement représenté par les flèches A et B. Ceci a pour effet de déporter le plan médian 46 de la roue d'un côté ou de l'autre par rapport à sa position normale et permet, notamment dans des moments critiques, de déplacer le point d'appui de la roue sur la route par rapport à la projection sur cette dernière du centre de gravité du véhicule. La conséquence en est un agrandissement de la surface de sustentation du véhicule et une augmentation de la stabilité de ce dernier due à un déplacement de la limite de stabilité.

Cet effet est de préférence commandé par un moteur électrique 47 susceptible d'entraîner dans un sens ou dans l'autre un train d'engrenages 48 couplé à une vis sans fin 49 qui engrène un secteur denté 50 solidaire du plateau 40. Ce secteur denté peut être constitué par le plateau lui-même ou par un élément rapporté fixé à ce plateau. Le moteur électrique 47 peut être commandé directement par le pilote ou commandé par un circuit électronique relié à un capteur conçu pour détecter une inclinaison critique du véhicule ou un début de dérapage etc.

Il est bien entendu que la commande par moteur électrique et par vis pourrait être remplacé par tout autre dispositif mécanique ou électromécanique approprié. En particulier, le pivotement du plateau 40 pourrait être obtenu par un vérin ou un moteur hydraulique, un électro-aimant à noyau plongeur etc.

## Revendications

1. Véhicule motorisé ou tracté destiné à se déplacer sur une surface d'appui déterminée, ce véhicule comportant au moins deux roues dont au moins une roue directrice, chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement en forme d'anneau, ce premier roulement comportant au moins un élément annulaire intérieur solidaire de ladite partie centrale de la roue et au moins un élément annulaire périphérique concentrique audit élément annulaire intérieur et solidaire de ladite partie périphérique, cette dernière portant un organe de contact correspondant à la nature de la surface d'appui du véhicule et ladite partie centrale de la roue étant liée à la structure de base du véhicule en au moins une zone d'ancrage décentrée de la roue, dans lequel ladite roue directrice est liée à la structure de base du véhicule par au moins un second roulement disposé dans un plan perpendiculaire au plan dudit premier roulement et comprenant un premier élément intérieur solidaire de l'élément annulaire intérieur dudit premier roulement et un second élément extérieur solidaire de la structure de base du véhicule, caractérisé en ce que ledit second roulement (24) est monté excentriquement sur un plateau (40) pivotant autour d'un axe (41) perpendiculaire au plan du plateau et parallèle à l'arc (45) du second roulement (24) et en ce que le véhicule est équipé d'un organe agencé pour faire pivoter ledit plateau (40) autour de son axe (41).

2. Véhicule selon la revendication 1, caractérisé en ce que le plateau (40) est monté dans un guide annulaire (42) solidaire du bras de suspension (17) de la roue directrice (10) de ce véhicule.

3. Véhicule selon la revendication 1, caractérisé en ce que l'organe agencé pour faire pivoter ledit plateau (40) comporte une vis (49) entraînée par un moteur électrique (47), cette vis étant en prise avec un secteur denté (50) solidaire dudit plateau.

4. Véhicule selon la revendication 1, caractérisé en ce que ledit second roulement est monté dans un évidement décentré ménagé dans le plateau (40).

5. Véhicule selon la revendication 1, caractérisé en ce que ledit second roulement (24) est fixé au plateau (40) par l'intermédiaire de son second élément extérieur.

6. Véhicule selon la revendication 5, caractérisé en ce que ledit second élément extérieur du second roulement (24) est fixé au plateau (40) par une bague de fixation (43) périphérique à l'évidement décentré ménagé dans ce plateau.

7. Véhicule selon la revendication 1, caractérisé en ce que l'organe agencé pour faire pivoter ledit plateau (40) comporte au moins une biellette couplée à un vérin.

## Patentansprüche

1. Motorisiertes oder gezogenes Fahrzeug zur Fortbewegung auf einer bestimmten Auflagefläche, wobei das Fahrzeug mindestens zwei Räder aufweist, wovon mindestens eines ein lenkbares Rad ist, und jedes dieser Räder aus einem inneren mit dem Grundaufbau des Fahrzeuges verbundenen Teil und einem zu dem inneren Teil konzentrischen peripheren Teil besteht, der so gestaltet ist, daß er sich um letzterer. dreht, und der innere Teil und der periphere Teil miteinander durch mindestens ein erstes ringförmiges Wälzlager verbunden sind, wobei dieses erste Wälzlager mindestens ein ringförmiges inneres Element hat, das mit dem inneren Teil des Rades fest verbunden ist und mindestens ein zu dem ringförmigen inneren Element konzentrisches, ringförmiges, peripheres Element, das mit dem peripheren Teil fest verbunden ist, und letzterer ein Kontaktorgan trägt, das der Beschaffenheit der Auflagefläche für das Fahrzeug entspricht, und außerdem der innere Teil des Rades in mindestens einer exzentrisch zum Rad liegenden Aufhängung mit dem Grundaufbau des Fahrzeuges verbunden ist, und weiterhin das lenkbare Rad mit dem Grundaufbau des Fahrzeuges durch mindestens ein zweites Wälzlager verbunden ist, das in einer zur Ebene des ersten Wälzlagers rechtwinklig liegenden Ebene angeordnet ist, und das ein mit dem ringförmigen inneren Element des ersten Wälzlagers fest verbundenes erstes inneres Element aufweist und ein zweites äußeres Element, das mit dem Grundaufbau des Fahrzeuges fest verbunden ist,
**dadurch gekennzeichnet,** daß das zweite Wälzlager (24) exzentrisch auf einer Platte (40) montiert ist, die um eine senkrecht zur Ebene der Platte liegende Achse (41) und parallel zum Bogen (45) des zweiten Wälzlagers (24) schwenkbar ist, und daß das Fahrzeug mit einer Einrichtung versehen ist, die dazu dient, die Platte (40) um ihre Achse (41) zu drehen.

2. Fahrzeug nach Anspruch 1,
**dadurch gekennzeichnet,** daß die Platte (40) in einer fest mit dem Aufhängungsarm (17) des Lenkrades (10) des Fahrzeuges verbundenen ringförmigen Führung (42) montiert ist.

3. Fahrzeug nach Anspruch 1,
**dadurch gekennzeichnet,** daß die zum Drehen der Platte (40) vorgesehene Einrichtung eine von einem Elektromotor (47) angetriebene Schraubenspindel (49) aufweist, wobei diese Schraubenspindel mit einem fest mit der Platte verbundenen gezahnten Sektor (50) im Eingriff steht.

4. Fahrzeug nach Anspruch 1,
**dadurch gekennzeichnet,** daß das zweite Wälzlager in einer in der Platte (40) angebrachten exzentrisch liegenden Aussparung eingebaut ist.

5. Fahrzeug nach Anspruch 1,
**dadurch gekennzeichnet,** daß das zweite Wälzlager (24) in der Platte (40) mittels eines zweiten äußeren Elementes befestigt ist.

6. Fahrzeug nach Anspruch 5,
**dadurch gekennzeichnet,** daß das zweite äußere Element des zweiten Wälzlagers (24) an der Platte (40) durch einen peripher an der in dieser Platte angebrachten exzentrischen Aussparung liegenden Befestigungsring fixiert ist.

7. Fahrzeug nach Anspruch 1,
**dadurch gekennzeichnet,** daß die zum Drehen der Platte (40) dienende Einrichtung mindestens eine mit einem Arbeitszylinder verbundene Anlenkstange aufweist.

## Claims

1. Motorized or tractor drawn vehicle designed to travel on a particular surface, said vehicle comprising at least two wheels, at least one of which is a drive wheel, each of said wheels comprising a central portion connected to a base structure of the vehicle and a peripheral portion concentric to the said central portion and disposed to turn about the central portion, said central portion and said peripheral portion being interconnected by at least a first ring shaped bearing, said first bearing comprising at least one interior annular element integral with the said central portion of the wheel and at least one peripheral annular element concentric to said interior annular element and integral with the said peripheral portion, the latter having a contact means appropriate to the nature of the surface with which the vehicle will be in contact, and the said central portion of the wheel being connected to the base structure of the vehicle at at least one connection point which is off-center on the wheel, wherein the drive wheel is connected to the base structure of the vehicle by at least one second bearing disposed in a plane perpendicular to the plane of the first bearing and comprising a first interior element integral with the interior annular element of the said first bearing and a second exterior element integral with the base structure of the vehicle, characterized in that the said second bearing (24) is excentrically mounted on a plate (40) pivotable around an axle (41) perpendicular to the plane of the plate and parallel to the arc (45) of the second bearing (24) and in that the vehicle is provided with a device disposed to cause the said plate (40) to pivot around its axle (41).

2. Vehicle according to claim 1, characterized in that the plate (40) is mounted in an annular guide (42) integral with the suspension arm (17) of the drive wheel (10) of the vehicle.

3. Vehicle according to claim 1, characterized in that the device for causing the said plate (40) to pivot comprises a screw (49) driven by an electric motor (47), said screw engaging a toothed element (50) integral with the said plate.

4. Vehicle according to claim 1, characterized in that the said second bearing is mounted in an off-center opening disposed in the plate (40).

5. Vehicle according to claim 1, characterized in that the said second bearing (24) is attached to the plate (40) by means of its second exterior element.

6. Vehicle according to claim 5, characterized in that the said second exterior element of the second bearing (24) is attached to the plate (40) by a peripheral connecting ring (43) in the off-center opening disposed in said plate.

7. Vehicle according to claim 1, characterized in that the device for causing the said plate (40) to pivot comprises at least one ball bearing coupled with a piston.
